Europäisches Patentamt

(19) European Patent Office

Office européen des brevets

(11) Publication number: **0 035 035**
**B1**

(12) EUROPEAN PATENT SPECIFICATION

(45) Date of publication of patent specification: **12.12.84**

(21) Application number: **79901093.9**

(22) Date of filing: **03.09.79**

(86) International application number:
**PCT/JP79/00232**

(87) International publication number:
**WO 81/00690 19.03.81 Gazette 81/07**

(51) Int. Cl.³: **B 29 D 23/03,** B 29 F 1/022

(54) PROCESS FOR MANUFACTURING DRAW BLOW-MOLDED BOTTLES OF SATURATED POLYESTER.

(43) Date of publication of application:
**09.09.81 Bulletin 81/36**

(45) Publication of the grant of the patent:
**12.12.84 Bulletin 84/50**

(84) Designated Contracting States:
**FR**

(56) References cited:
**JP-A-54 069 175**
**JP-A-54 069 176**
**JP-B-47 038 548**
**JP-U-53 140 658**

(73) Proprietor: **Yoshino Kogyosho CO., LTD.
No. 2-6, Ojima 3-chome, Koto-ku
Tokyo 136 (JP)**

(72) Inventor: **ITAKURA, Takeshi
43-23, Ooyata 1
Adachi-ku Tokyo 120 (JP)**

(74) Representative: **Descourtieux, Philippe et al
CABINET BEAU de LOMENIE 55 rue
d'Amsterdam
F-75008 Paris (FR)**

Courier Press, Leamington Spa, England.

## Description

Technical field:

The present invention relates to an improved process for manufacturing saturated polyester bottles with a reinforced neck by draw blow-molding.

Background art:

Recently, saturated polyester bottles produced by draw blow molding are drawing attention because of their advantages such as excellent gas barrier properties, glass-like clarity, shatter resistance, and non-toxicity.

These characteristics which are due to the orientation of molecules do not manifest themselves in the bottle necks which do not undergo orientation. Therefore, the bottle necks sometimes give rise to whitening or crazing when attacked by alcohols, esters, etc. contained in high concentrations in the contents of bottles.

To eliminate this drawback, a process has been developed in which the bottle neck part of the parison is annealed before the parison is blow molded, immediately after the parison has been blow molded, or after the blow molded bottle has been cooled. This annealing is based on the principle that when subjected to slow cooling, saturated polyesters, even though unoriented, whiten, forming crystals (spherulites), and become chemically stable against the attack of alcohols etc. Annealing, however, requires additional heating and cooling cycles that slow down the entire process.

On the other hand it is already known by JP—A—54—69175 a method for injection molding a parison which is a primary molded article of a biaxially oriented blow molded bottle made of synthetic resin, wherein in molding the parison, a turning force in a direction perpendicular to an injection and filling direction of a molding resin material is exerted on a cylindrical mouth portion of the parison, which portion is not subjected to biaxial orientation blowing, and the action equal to that of orientation molding is applied to the synthetic resin material used to mold the cylindrical mouth portion by the action of said turning force. Finally it is already known by JP—A—54—69176, a method for molding a parison which is a primary molded article of a biaxially oriented blow molded bottle made of synthetic resin, wherein under the condition that the injection molded parison is heated to a temperature which provides an orientation effect, at least a cylindrical mouth portion is held in its outer peripheral surface immovably, and a molding resin material of the cylindrical mouth portion thus held immovably is forcibly rotated and moved in a given direction by means of a rotating member to thereby give an orientation effect to said cylindrical mouth portion.

Disclosure of invention:

It is the object of this invention to provide a new process which is free from the above-mentioned drawbacks. The process of this invention is based on the principle that if injection into a mold is performed in such a manner that a saturated polyester is subjected to a centrifugal force, the orientation of molecules takes place and the saturated polyester exhibits improved properties which are obtained normally by orientation. According to the invention, there is provided a process for manufacturing a saturated polyester bottle by draw blow-molding, which process comprises preparing a parison by injecting, through a first inlet, a molten saturated polyester into the neck part of a mold such that the injected polyester vigorously circulates in the cavity and is oriented in the direction of the flow of the vigorous circulation, said polyester having an intrinsic viscosity high enough to guarantee orientation of the molecules during the circulation while simultaneously injecting in a conventional manner, through a second inlet, a molten saturated polyester having an intrinsic viscosity low enough to guarantee good moldability, into the bottom and body part of the mold, and subsequently subjecting the thus parison to draw blow-molding.

The neck part has a generally cylindrical shape and the corresponding part of the molded parison will not need to be subjected to draw blow-molding during the subsequent forming of a bottle, since in said neck part cavity the polyester is oriented in the direction of the flow of the vigorous circulation during the molding of the parison.

The bottle formed from this parison by draw blow-molding exhibits outstanding properties due to molecular orientation of the whole bottle. In the process of this invention, no additional step is required between molding the parison and draw blow-molding the bottle.

Brief description of drawings:

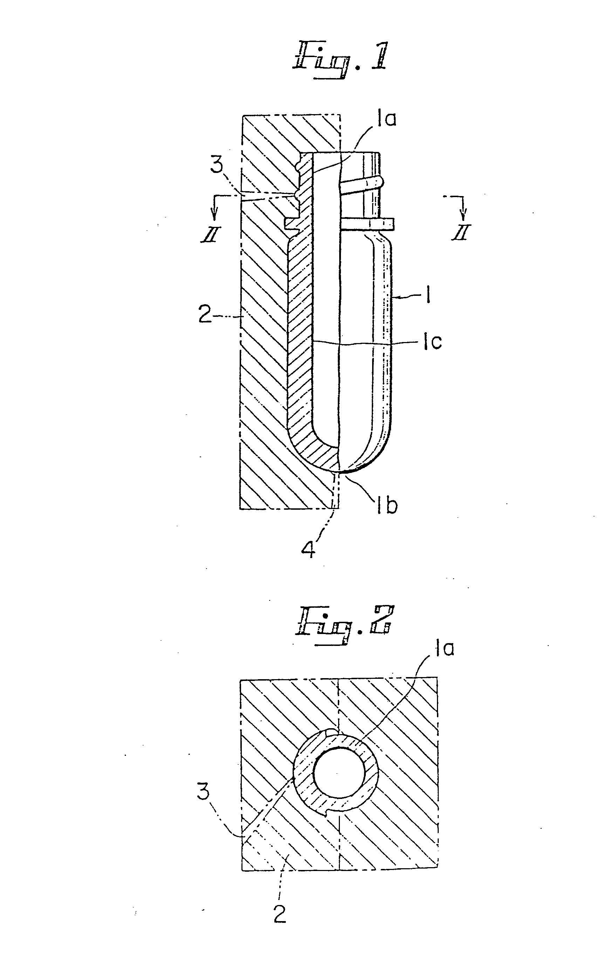

Fig. 1 is an elevation half in section of the parison as formed in the mold.

Fig. 2 is a sectional view taken in the direction of the arrows along line II—II of Fig. 1.

Best mode for carrying out the invention:

An embodiment of the present invention will be described with reference to the accompanying drawings, in which a mold 2 for molding a parison 1 is provided with a first inlet 3 through which molten resin enters the neck 1a of the parison and a second inlet 4 through which molten resin enters the bottom 1b of the parison. The first inlet 3 is for a saturated polyester of high intrinsic-viscosity number which is resistant to whitening and crazing, and the second inlet is for a saturated polyester of low intrinsic-viscosity number which has a good moldability. Adequate adjustment is made so that the molten resin from the inlet 3 forms the neck 1a and the molten resin from the inlet 4 forms the body 1c and the bottom 1b.

The parison 1 thus formed has the neck 1a in which resin molecules are oriented due to the centrifugal force generated during injection, and therefore, no additional steps are required to bring about orientation in the neck.

Description of symbols:

| | |
|---|---|
| 1 | Parison |
| 1a | Neck |
| 1b | Bottom |
| 1c | Body |
| 2 | Mold |
| 3 | Inlet |
| 4 | Inlet |

## Claim

Process for manufacturing a saturated polyester bottle by draw blow-molding, which process comprises preparing a parison (1) by injecting, through a first inlet (3), a molten saturated polyester into the neck part of a mold (2) such that the injected polyester vigorously circulates in the cavity and is oriented in the direction of the flow of the vigorous circulation, said polyester having an intrinsic viscosity high enough to guarantee orientation of the molecules during the circulation, while simultaneously injecting in a conventional manner, through a second inlet (4), a molten saturated polyester having an intrinsic viscosity low enough to guarantee good moldability, into the bottom and body part of the mold, and subsequently subjecting the thus formed parison to draw blow-molding.

## Patentanspruch

Verfahren zur Erzeugung einer Flasche aus gesättigtem Polyester durch Zieh-Blasformung, welches Verfahren dadurch gekennzeichnet ist, daß ein Rohling (1) hergestellt wird, indem geschmolzener, gesättigter Polyester durch einen ersten Einlaß (3) in den Halsteil einer Form (2) so eingespritzt wird, daß der eingespritzte Polyester im Hohlraum heftig zirkuliert und in der Strömungsrichtung der heftigen Zirkulation orientiert wird, wobei der Polyester eine intrinsische Viskosität besitzt, die hoch genug ist, um die Orientierung der Moleküle während der Zirkulation zu gewährleisten, während gleichzeitig auf herkömmliche Art durch einen zweiten Einlaß (4) ein geschmolzener, gesättigter Polyester mit einer intrinsischen Viskosität, die niedrig genug ist, um eine gute Formbarkeit zu gewährleisten, in den Boden- und Körperteil der Form eingespritzt wird und danach der so geformte Rohling der Zieh-Blasformung unterzogen wird.

## Revendication

Procédé de fabrication d'une bouteille en polyester saturé par moulage-soufflage, qui consiste à préparer une paraison (1) par injection, via une première entrée (3), d'un polyester saturé en fusion dans la partie col d'un moule (2) de façon que le polyester injecté circule vigoureusement dans la cavité et soit orienté dans la direction d'écoulement de la circulation vigoureuse, ledit polyester possédant une viscosité intrinsèque suffisamment élevée pour garantir l'orientation des molécules pendant la circulation, tout en injectant simultanément, de manière classique, via une deuxième entrée (4), un polyester saturé en fusion possédant une viscosité intrinsèque suffisamment basse pour garantir une bonne moulabilité dans les parties fond et corps du moule, et à soumettre ensuite la paraison ainsi formée au moulage-soufflage.

## Fig. 1

## Fig. 2